(19) Europäisches Patentamt
European Patent Office
Office européen des brevets

(11) EP 0 866 278 A1

(12) **EUROPÄISCHE PATENTANMELDUNG**

(43) Veröffentlichungstag:
23.09.1998 Patentblatt 1998/39

(51) Int. Cl.⁶: $F24C\ 7/08$, $G05D\ 23/19$

(21) Anmeldenummer: 98104291.4

(22) Anmeldetag: 10.03.1998

(84) Benannte Vertragsstaaten:
AT BE CH DE DK ES FI FR GB GR IE IT LI LU MC
NL PT SE
Benannte Erstreckungsstaaten:
AL LT LV MK RO SI

(30) Priorität: 18.03.1997 DE 19711291

(71) Anmelder:
Bosch-Siemens Hausgeräte GmbH
81669 München (DE)

(72) Erfinder:
• Horn, Katrin, Dipl.oec.troph.
83301 Traunreut (DE)
• Marbach, Andreas, Dipl.-Ing. (FH)
83374 Traunreut (DE)
• Has, Uwe, Dipl.-Ing.
84579 Unterneukirchen (DE)

(54) **Verfahren zur Regelung thermischer Strecken und Heizeinrichtungen in Haushaltgeräten**

(57) Verfahren zur Regelung thermischer Strecken und Heizeinrichtungen in Haushaltgeräten, vorzugsweise für Kochmulden, wobei die Regelung der Heizeinrichtung des Haushaltgerätes in drei Phasen erfolgt,

. Anfahren des Sollwertes,
. Einschwingen in den Sollwert und
. Halten des Sollwertes,

wobei die Regelung während des Regelprozesses für das zu erwärmende Objekt ohne Über- und Unterschwinger erfolgt.

FIG. 1

**Beschreibung**

Die Erfindung bezieht sich auf ein Verfahren zur Regelung thermischer Strecken und Heizeinrichtungen in Haushaltgeräten, vorzugsweise für Kochmulden, die aus Gargerät einer Sensorik und im Kochfeld und beispielsweise einem Glaskeramikkochfeld bestehen können.

Es ist üblich, die Wärmezufuhr in Gargeräten zur Erwärmung von Gütern in Abhängigkeit einer zu erreichenden Mindesttemperatur zu regeln. Insbesondere sind für Haushaltgeräte einfache Zweipunktregler in Gebrauch, wobei die Erwärmung der Gargüter nicht immer optimierbar ist. Es ist daher bekannt, die Wärmezuführung für Gargeräte durch Temperatursensoren zu überwachen und zu steuern. Weiterhin ist es bekannt, auf Kochmulden plazierte Kochgeschirre durch Infrarotsensoren temperaturmäßig zu überwachen und zu regeln. Konventionelle Lösungen des Regelproblems, gemäß derer die Leistungszufuhr zur geregelten Kochstelle abgeschaltet oder getaktet wird, wenn die Ist-Temperatur die Soll-Temperatur erreicht oder überschreitet, gehören ebenso zum Stand der Technik. Diese konventionellen Regelsysteme neigen besonders beim Anfahren bzw. Erreichen des Sollwertes zu mehr oder weniger starkem Über- und Unterschwingen des Sollwertes der Erwärmungsendtemperatur. Durch dieses Verhalten ist es erschwert, mit einem konventionellen Regler, beispielsweise Milch, gebundene Suppen, Gulasch und Eintöpfe aller Art und weitere den vorgenannten Speisen entsprechende Gerichte in einem kalten Kochgeschirr durch Erwärmen auf Kochmulden auf eine Soll-Temperatur zu bringen, ohne daß dabei aufgrund des ersten Überschwingers das Kochgut im Kochgeschirr ansetzt und möglicherweise auch anbrennt.

Aufgabe der Erfindung ist es daher, ein Verfahren zur Regelung der Temperatur auf der Grundlage von Regeln und/oder variabler Regelungskennfelder zu entwickeln. Die Lösung der Aufgabenstellung ist dadurch gekennzeichnet, daß die Regelung der Heizeinrichtung des Haushaltgerätes in drei Phasen erfolgt,

. Anfahren des Sollwertes,
. Einschwingen in den Sollwert und
. Halten des Sollwertes, wobei die Regelung während des Regelprozesses für das zu erwärmende Objekt ohne Über- und Unterschwinger erfolgt.

Weitere vorteilhafte Lösungsvarianten sind den Unteransprüchen entnehmbar. Ein Ausführungsbeispiel der Erfindung ist im folgenden anhand der Zeichnungen näher beschrieben.

Es zeigt

Fig. 1    eine dem Regelungsverfahren entsprechende Regelkurve $T = k \cdot f(t)$,

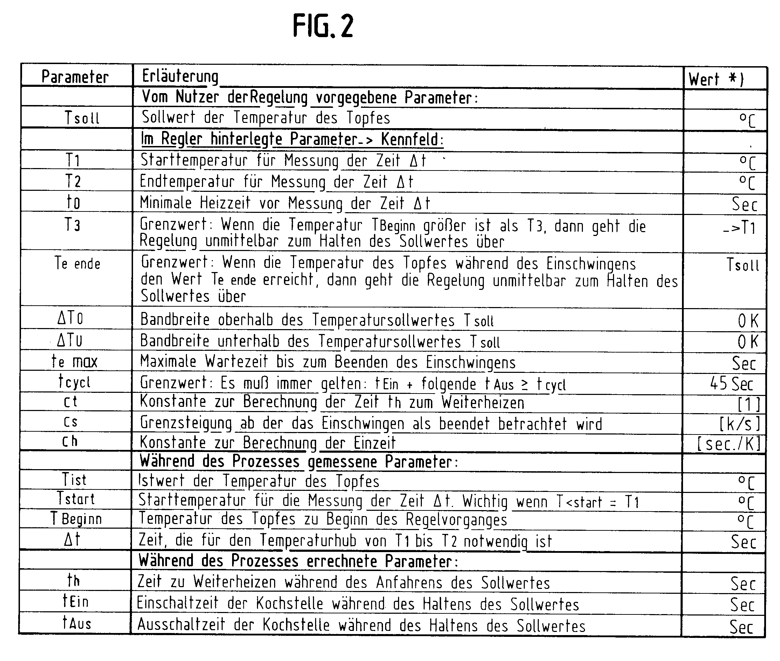

Fig. 2    eine tabellarische Auflistung aller im Erfindungsbeschreibungstext erwähnten Formelzeichen.

Verfahren zur Regelung von Temperaturen für Hausgeräte können nur sehr selten auf der Grundlage einer analytischen Betrachtung des zu regelnden Systems entwickelt werden. Dafür ausschlaggebende Gründe liegen im einzelnen daran, daß

. die verfügbare Heizleistung (beispielsweise auch Kühlleistung) unbekannt bzw. schwankend ist,

. die thermische Masse, deren Temperatur geregelt wird, unbekannt ist,

. die Störungen auf alle Systemteile umfangreich und nicht beschreibbar sind,

. die Eigenschaften des Gesamtsystems während eines Regelvorganges bzw. im Lauf der Lebensdauer veränderlich sind,

. die Parameter nicht in Echtzeit abschätzbar sind und

. der Ist-Wert der Lebensmitteltemperatur nur indirekt ermittelbar ist.

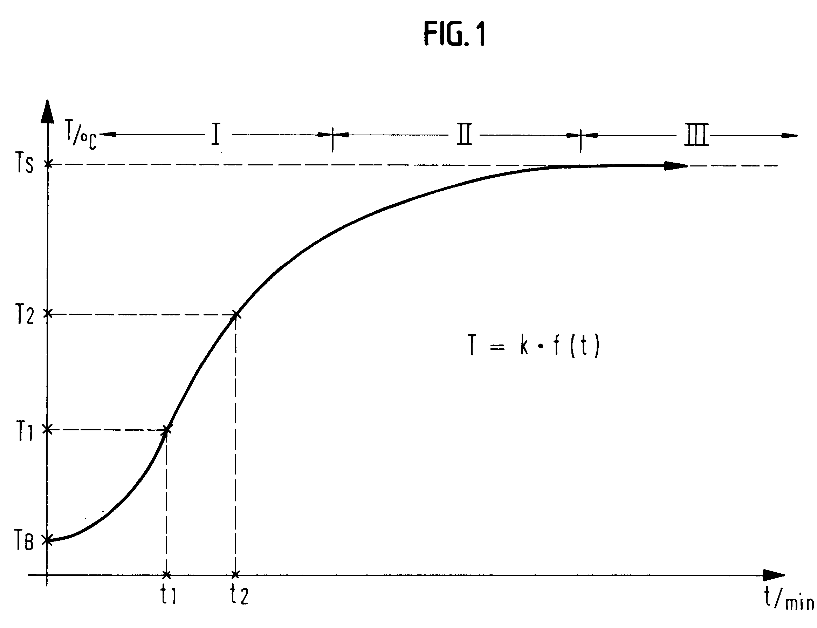

Das Regelungsverfahren bezieht sich in der derzeitigen Hardwarelösung auf Regler, die als Leistungssteller einen Zweipunktschalter, beispielsweise Relaisschalter, betätigen, wobei die im Nulldurchgang der Wechselspannungsversorgung schaltenden Halbleiterelemente, beispielsweise Thyristoren, nicht eingeschlossen sind. Übliches Ziel einer Temperaturregelung ist es, die tatsächliche Temperatur $T_{Ist}$ eines Gargutes von einem gegebenen Anfangswert $T_{Beginn}$ auf einen gewünschten Sollwert $T_{Soll}$ zu bringen. Die Ist-Temperatur $T_{Ist}$ des Gargutes soll während des gesamten Regelprozesses möglichst keine Über- und keine Unterschwinger zeigen. Wenn die Ist-Temperatur $T_{Ist}$ den Sollwert $T_{Soll}$ erreicht hat, dann muß dieser Sollwert möglichst genau und ohne Auftreten einer Regelamplitude gehalten werden. Nach Störungen des Systems muß die Ist-Temperatur möglichst schnell auf den Sollwert zurückgeführt werden. Dies gilt analog bei einer Änderung des Sollwertes. Ein Regelvorgang der genannten Art ist im wesentlichen in die Abschnitte Anfahren des Sollwertes, Einschwingen in den Sollwert und Halten des Sollwertes unterteilt. Im folgenden wird das Regelungsverfahren durch die gemäß Fig. 1 gegebene Regelkurve erläutert. Nach dem Einschalten der Regelung ist es notwendig, das Anfahren des Sollwertes anzugehen. Zur Erläuterung des Regelungsverfahrens wird vorausgesetzt, daß es sich im folgenden um eine Kochstelle handelt, auf der auf mindestens einer Energiezufuhrstelle Gargutträger angeordnet sind. Die nunmehr zugeführte Energie veranlaßt den auf der Kochstelle angeordneten Topf von einer Starttemperatur $T_b$ die Erwärmung auf $T_1$ zu durchfahren. Mit der erreichen Temperatur $T_1$ ist gemäß Definition durch Fig. 1 eine zugehörige in Minuten gemessene Zeit $t_1$ verstrichen. Hat in der Anfahrphase des Sollwertes der Topf den Temperaturwert $T_2$ erreicht, der mit einer Zeitdauer $t_2$ korreliert, dann läßt sich aus dem Temperaturhub $T_2 - T_{Start}$ eine für das Weiterheizen notwendige Zeit $t_h$ bestimmen. Die für die Temperaturdifferenz $T_2 - T_{Start}$ benötigte Zeit sei in diesem Zusammenhang mit $\Delta t$ bezeichnet. Betrachtet man das Kurvenbild gemäß Abschnitt I mit dem eingezeichneten Parameter T und t, dann ergibt sich in erster Näherung aus Beziehungen des Strahlensatzes, die Gleichung für das Zeitverhalten beim Weiterheizen zu

$$t_h = \frac{\Delta t \cdot C_t \cdot (T_2 - T_1)}{T_2 - T_{Start}}$$

Das Regelungsverfahren ist darauf abgestellt, daß nach Ablauf der Zeit $t_h$ die Heizung der Kochstelle abgeschaltet wird. Die Temperatur des Topfes steigt danach weiter an und schwingt sich auf einen Wert ein, der gemäß Fig. 1 im Bereich des Abschnittes II liegt und in der Nähe des Sollwertes der Regelungskurve plaziert ist. Nach dem Einschwingen der Topftemperatur in den Sollwert muß die Temperatur auf dem Sollwert gehalten werden. Der mögliche Wertebereich der Ist-Temperatur $T_{Ist}$ kann in drei Bereiche aufgeteilt werden

. die Temperatur $T_{Ist}$ liegt weit über dem Sollwert $T_{Soll}$. In einem solchen Fall muß die Kochstelle länger ausgeschaltet werden.

. die Temperatur $T_{Ist}$ liegt in der nähe des Sollwertes $T_{Soll}$. In diesem Fall ist es ratsam, die Heizung mit der vermutlich benötigten Heizleistung zu takten, damit die Temperatur nicht zu weit und nicht zu schnell überschwingen kann. Das heißt, die Werte für $t_{ein}$ und $t_{aus}$ müssen fest vorgegeben werden.

. die Temperatur $T_{Ist}$ liegt weit unter dem Sollwert. In einem solchen Fall muß die Heizung mit umso längeren Einzeiten getaktet werden, je weiter der Ist-Wert unter dem Soll-Wert liegt. Die Einzeit $t_{Ein}$ wird hierbei wie folgt berechnet:

$$t_{Ein} = C_h \cdot (T_{Soll} - T_{Ist})$$

Die einer Ein-Zeit folgende Aus-Zeit $t_{Aus}$ ergibt sich hernach als Differenz $t_{Aus} = t_{cycl} - t_{Ein}$. Im allgemeinen sind solche Regelungskorrekturen unnötig, wenn die Regelkurve $T = k \cdot f(t)$ gargutspezifisch optimal durchlaufen werden kann. Es gilt zudem, daß für jeden Sollwert bzw. für bestimmte Sollwertbereiche ein spezieller Satz von im Regler abgelegten Parametern von nöten ist. Der Vorteil der vorgestellten erfindungsgemäßen Regelungsverfahren für Hausgeräte besteht darin, daß durch eine geeignete Parameterwahl das geschilderte Verfahren relativ universal einsetzbar erscheint.

## Patentansprüche

1. Verfahren zur Regelung thermischer Strecken und Heizeinrichtungen in Haushaltgeräten, vorzugsweise für Kochmulden, **dadurch gekennzeichnet,** daß die Regelung der Heizeinrichtung des Haushaltgerätes in drei Phasen erfolgt,

   . Anfahren des Sollwertes,
   . Einschwingen in den Sollwert und
   . Halten des Sollwertes,

   wobei die Regelung während des Regelprozesses für das zu erwärmende Objekt ohne Über- und Unterschwinger erfolgt.

2. Verfahren zur Regelung thermischer Strecken und Heizeinrichtungen nach Anspruch 1, **dadurch gekennzeichnet,** daß das Regelungsverfahren im Anfahrvorgang bis zum Erreichen des Soll-Wertes eine Weiterheizdauer definiert, die der Beziehung

$$t_h = \frac{\Delta t \cdot C_t \cdot (T_2 - T_1)}{T_2 - T_{Start}}$$

   genügt.

3. Verfahren zur Regelung thermischer Strecken und Heizeinrichtungen nach Anspruch 1, **dadurch gekennzeichnet,** daß das Regelungsverfahren das Einschwingen in den Sollwert als vollzogen erkennt,

   . wenn die Temperatur des zu erwärmenden Objektes einen vorgegebenen Wert erreicht hat,

   . wenn die Temperaturanstiegsparameter eine Einschwingdauer als beendet definieren und

   . wenn eine vorgegebene Einschwingdauer abgelaufen ist.

4. Verfahren zur Regelung thermischer Strecken- und Heizeinrichtungen nach Anspruch 1, dadurch gekennzeichnet, daß das Regelungsverfahren für das Halten des Soll-Wertes die dazu benötigte Heizleistung so taktet, daß die Ist-Temperatur die Soll-Temperatur nur unwesentlich unter- oder überschreitet.

# FIG. 1

$$T = k \cdot f(t)$$

# FIG. 2

| Parameter | Erläuterung | Wert *) |
|---|---|---|
| | **Vom Nutzer der Regelung vorgegebene Parameter:** | |
| Tsoll | Sollwert der Temperatur des Topfes | °C |
| | **Im Regler hinterlegte Parameter-> Kennfeld:** | |
| T1 | Starttemperatur für Messung der Zeit $\Delta t$ | °C |
| T2 | Endtemperatur für Messung der Zeit $\Delta t$ | °C |
| t0 | Minimale Heizzeit vor Messung der Zeit $\Delta t$ | Sec |
| T3 | Grenzwert: Wenn die Temperatur TBeginn größer ist als T3, dann geht die Regelung unmittelbar zum Halten des Sollwertes über | ->T1 |
| Te ende | Grenzwert: Wenn die Temperatur des Topfes während des Einschwingens den Wert Te ende erreicht, dann geht die Regelung unmittelbar zum Halten des Sollwertes über | Tsoll |
| $\Delta T0$ | Bandbreite oberhalb des Temperatursollwertes Tsoll | 0 K |
| $\Delta Tu$ | Bandbreite unterhalb des Temperatursollwertes Tsoll | 0 K |
| te max | Maximale Wartezeit bis zum Beenden des Einschwingens | Sec |
| tcycl | Grenzwert: Es muß immer gelten: tEin + folgende tAus $\geq$ tcycl | 45 Sec |
| ct | Konstante zur Berechnung der Zeit th zum Weiterheizen | [1] |
| cs | Grenzsteigung ab der das Einschwingen als beendet betrachtet wird | [k/s] |
| ch | Konstante zur Berechnung der Einzeit | [sec./K] |
| | **Während des Prozesses gemessene Parameter:** | |
| Tist | Istwert der Temperatur des Topfes | °C |
| Tstart | Starttemperatur für die Messung der Zeit $\Delta t$. Wichtig wenn T<start = T1 | °C |
| TBeginn | Temperatur des Topfes zu Beginn des Regelvorganges | °C |
| $\Delta t$ | Zeit, die für den Temperaturhub von T1 bis T2 notwendig ist | Sec |
| | **Während des Prozesses errechnete Parameter:** | |
| th | Zeit zu Weiterheizen während des Anfahrens des Sollwertes | Sec |
| tEin | Einschaltzeit der Kochstelle während des Haltens des Sollwertes | Sec |
| tAus | Ausschaltzeit der Kochstelle während des Haltens des Sollwertes | Sec |

EP 0 866 278 A1

# EP 0 866 278 A1

EUROPÄISCHER RECHERCHENBERICHT

Europäisches Patentamt

Nummer der Anmeldung

EP 98 10 4291

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| P,X | US 5 721 419 A (WAUER ET AL.) 24.Februar 1998<br>* Zusammenfassung *<br>* Spalte 3, Zeile 36 – Spalte 5, Zeile 34; Abbildungen 1-3 *<br>--- | 1,3,4 | F24C7/08<br>G05D23/19 |
| X | GB 2 073 455 A (APPLIANCE CONTROL SYSTEMS PTY. LTD.) 14.Oktober 1981<br>* Zusammenfassung * | 1,3,4 | |
| A | * Seite 2, Zeile 108 – Seite 3, Zeile 24; Abbildung 1 *<br>--- | 2 | |
| X | US 4 682 012 A (WOLF ET AL.) 21.Juli 1987<br>* Zusammenfassung *<br>* Spalte 4, Zeile 24 – Spalte 5, Zeile 44; Abbildungen 1,2,4,5 *<br>--- | 1-4 | |
| X | US 4 700 052 A (WOLF ET AL.) 13.Oktober 1987<br>* Zusammenfassung *<br>* Spalte 4, Zeile 59 – Spalte 5, Zeile 61; Abbildungen 1,2 *<br>--- | 1-4 | |
| X | EP 0 275 990 A (MATSUSHITA INDUSTRIAL CO., LTD.) 27.Juli 1988<br>* Zusammenfassung *<br>* Seite 3, Zeile 45 – Seite 7, Zeile 17; Abbildungen 4-8 *<br>--- | 1,3,4 | RECHERCHIERTE SACHGEBIETE (Int.Cl.6)<br><br>F24C<br>G05D |
| X | US 4 431 906 A (OOTA ET AL.) 14.Februar 1984<br>* Spalte 4, Zeile 44-58 *<br>* Spalte 7, Zeile 3 – Spalte 10, Zeile 31 *<br>* Spalte 11, Zeile 23-56; Abbildung 3 *<br>---<br>-/-- | 1-4 | |

Der vorliegende Recherchenbericht wurde für alle Patentansprüche erstellt

| Recherchenort | Abschlußdatum der Recherche | Prüfer |
|---|---|---|
| BERLIN | 17.Juni 1998 | Beitner, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes Dokument

EPO FORM 1503 03.82 (P04C03)

6

Europäisches
Patentamt

**EUROPÄISCHER RECHERCHENBERICHT**

Nummer der Anmeldung

EP 98 10 4291

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US 4 585 925 A (ANDRE) 29.April 1986<br>* Zusammenfassung *<br>* Spalte 3, Zeile 39 - Spalte 5, Zeile 11; Abbildungen 1-3 *<br>--- | 1-4 | |
| A | US 4 737 617 A (PAYNE) 12.April 1988<br>* Zusammenfassung *<br>* Spalte 4, Zeile 17 - Spalte 10, Zeile 15; Abbildungen 1-5; Tabellen I,II *<br>----- | 1 | |
| | | | **RECHERCHIERTE SACHGEBIETE (Int.Cl.6)** |

Der vorliegende Recherchenbericht wurde für alle Patentansprüche erstellt

| Recherchenort | Abschlußdatum der Recherche | Prüfer |
|---|---|---|
| BERLIN | 17.Juni 1998 | Beitner, M |

KATEGORIE DER GENANNTEN DOKUMENTE

X : von besonderer Bedeutung allein betrachtet
Y : von besonderer Bedeutung in Verbindung mit einer
      anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
      nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie,übereinstimmendes
      Dokument

EPO FORM 1503 03.82 (P04C03)